# EUROPEAN PATENT APPLICATION

(11) **EP 1 602 866 A1**
(43) Date of publication of application: **07.12.2005**
(21) Application number: 05425143.4
(22) Date of filing: 11.03.2005
(51) Int. Cl.: F16K 1/30, F16K 11/22, F16K 21/02, F16K 1/52, F23D 14/46

(54) **Rapid opening unit in control cocks for delivering a fluid to a nozzle**

(30) Priority: 01.06.2004 IT BS20040069
(71) Applicant: Gnali Bocia S.r.l., 25066 Lumezzane (Brescia) (IT)
(72) Inventor: Gnali, Luigi, 25066 Lumezzanze Valle (IT); Gnali, Gianbattista, 25066 Lumezzanze Valle (IT); Gnali, Andrea, 25066 Lumezzanze Valle (IT)
(74) Representative: Sangiacomo, Fulvia

(57) **Abstract**

The invention concerns a rapid opening unit for control cocks of the delivery of a fluid to a release nozzle made up of, in addition to a main plug (17) moved by a knob and operating on a first valve seat (16) in a main duct, a secondary stopper (21) associated with a second valve seat (32) in a secondary duct (27-31) derived from the main duct. The secondary stopper (21) which moves in a guide sleeve, is normally held in the open position by a spring and can be moved in the open position by a second class lever (22), with an end levered to the body cock and acting on the secondary body with its intermediate part.

## Description

### Field of the Invention

This invention concerns the field of the control cocks for the delivery of a fluid, in particular gas, from a source of supply to a user unit, it refers especially to a rapid opening unit for said cocks and it is applicable in particular, but not only, to the type of plug cocks used to feed a gas to the burner of gas welders and like.

### State of the technique

The cocks for the above mentioned use have in themselves a normal opening/closing system and variation of the delivery of the gas to the user unit. Such an opening/closing system usually consists of a plug controlled and movable by means of a knob which turns and interacts with a valve seat located in a duct which leads from a gas input in the cock to an output towards a nozzle on a level with a burner.

For some applications of said cocks, as in the case of gas welders, both a minimum flow of gas to keep a pilot flame alight on the burner nozzle and a full flow of gas when the gas device is required for proper use, is needed. A passage from a minimum flow to a full flow of gas, if carried out using a normal opening/closing system would be too slow and hard if a control knob has to be turned. Because of this, cocks of the type above have been proposed and are available which are also equipped with a rapid opening device in addition to the normal opening/closing system.

According to a known embodiment, the rapid opening device includes an additional or secondary stopper, operating along a conduit derived from the duct which leads from the gas input in the cock to the output in line with the delivery nozzle, and a control lever associated with the additional stopper. Such a device has, however, drawbacks due to the fact that in order to move the secondary stopper in the close position, robust springs are required which have a negative influence on the overall dimensions, and control lever is of the first class and tends to deviate the stopper in respect to its axis, when it is open, causing flexing, friction and resistance resulting in an increase in force in order to operate.

### Object and Summary of the Invention.

The objective of this invention is to provide and produce a rapid opening unit for the type of plug cocks stated above, and simplified as regards to construction, absolutely reliable and requiring less force to operate and there being no possibility of accidental delivery when the main plug is closed, thus guaranteeing the safety condition.

The objective is achieved, according to the invention, with a rapid opening unit for cocks which includes, within the sphere of a cock having in itself a normal closing system comprising a main plug governed by a knob and operating on a first valve seat in a main duct for the fluid to be delivered, a secondary stopper that moves like a plunger between a closed position and an open position of a second valve seat in a secondary duct for the fluid derived from said main duct, the closed position of said secondary stopper being held normally by a spring, whereas for the open position a lever is envisaged, having at one end a fulcrum on the cock body and acting with an intermediate part on the second piston type secondary stopper.

### Brief Description of the Drawings

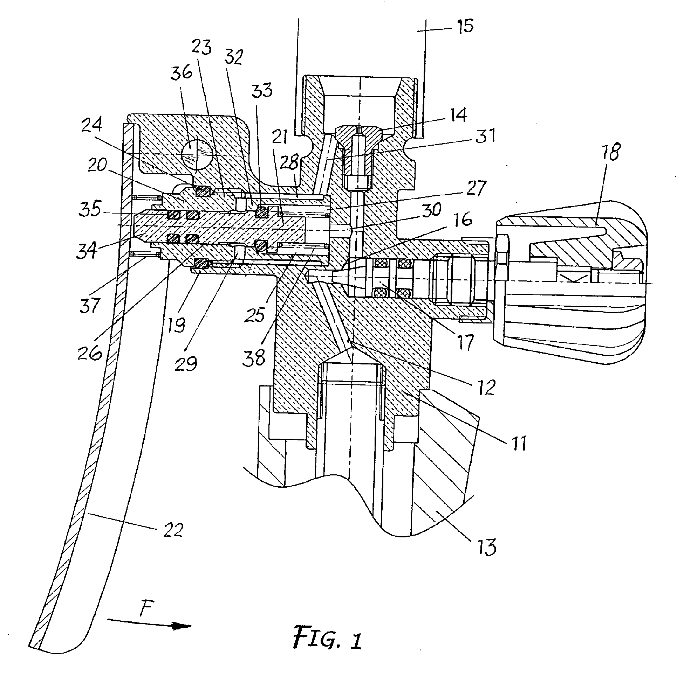

Further details of this invention will become more evident in the continuation of this description made in reference to the enclosed drawing, in which the only figure shows a cross-section of a cock complete with a rapid opening unit in the closed position.

### Detailed Description of the Invention

As shown, the cock comprises a body 11defining a main duct 12 which leads from a fluid input, such as gas, in communication with a delivery source 13, to an output towards a delivery nozzle 14, in line with, for example, a burner 15. A first valve seat 16 is formed in an intermediate part of the duct 12, which is associated with a first turning type opening/closing plug 17 controlled by a knob 18.

In the cock body 11 a housing 19 is formed into which a guide sleeve 20 has been screwed, which houses a secondary stopper 21 controlled manually by means of a lever 22.

More precisely, the guide sleeve 20 has a head 23 which screws into said housing 19 with the interposition of a seal 24, and a tubular section 25 facing towards the main duct 12. The head 23 of the sleeve 20 has an axial bore 26 and the tubular section 25 forms, internally, a chamber 27 and, externally, an annular channel 28 which communicates with the internal chamber 27 through radial bores 29 machined in said tubular section adjacent to the head 23.

The chamber 27 communicates, through a passage 30, with duct 12 in a part of the latter between the first valve seat 16 and the nozzle 14. The annular channel 28, besides being in communication with said chamber 27 by means of the radial bores 29, is in communication with a secondary duct 31 that exits from one side of the nozzle 14.

In chamber 27, in consideration of the direction of the flow of the fluid, downstream compared with the radial bores 29 that place it in communication with the external annular channel 28, a second valve seat 32 is envisaged.

The secondary stopper 21, positioned in said chamber 27, acts on the second valve seat 32 by means of a seal 33 and has a stem 34, which is guided in the axial bore 26 of the head of the sleeve 20 with the interposition of seals 35 and which continues towards the control lever 22. This control lever 22 belongs to the second class. It has a fulcrum on the valve body 11 formed of a pin 36, and an intermediate part of which engages the stem 34 of the secondary stopper 21. A spring 37 positioned between the head 23 of the sleeve 20 and the lever 21 usually holds the latter in a rest position.

The secondary stopper 21 can move in the chamber 27 between a closed position on the second valve seat 32, as shown in the drawing, and an open position. It is normally thrust into the closed position by a return spring 38 placed in the chamber 27 and is moved into the open position by the control lever 22.

In the cock described above, with the main plug 17 it is possible to close, open and adjust the flow of the fluid, that is gas, through the duct 12 from the source of supply to the delivery nozzle 14, where combustion can be struck and a pilot flame can be maintained with feed at a minimum. On the other hand, by using the control lever 22 it is possible to rapidly open the conduits for a full delivery of fluid to the burner.

So, by turning the lever 22 in the direction of the arrow F, the lever moves the secondary stopper 21 back, opening the second valve seat 32 so that the fluid can flow, through the passage 30, from the main duct 12 to the chamber 27 and from here to the burner 15, through second valve seat 32, the radial bores 29, the annular channel 28 and the secondary duct 31.

Once the manual action of the lever terminates, the latter, under the thrust of the spring 37 returns to the rest position enabling the secondary stopper 21 to move into the closed position of the second valve seat 32, under the thrust of its relative spring 38.

## Claims

1. A rapid opening unit for a control cock for delivering of a fluid to a nozzle, where a cock body includes a normal closing system consisting in a main plug (17) moved by a knob and operating on a main valve seat (16) in a main duct (12) for the fluid to be delivered, **characterised by** a secondary stopper (21) movable as a plunger between a closed position and an open position of a second valve seat (32) in a secondary duct (27-31) for the stopper (21) is normally maintained by a spring, whereas for the open position a second class lever (22) is envisaged, the end of which is levered to the cock body and an intermediate part of which acts on the secondary plunger type stopper (21).

2. A rapid opening unit according to claim 1 for a valve in which the main duct (12) leads from a fluid input to the delivery nozzle (14), the main valve seat (16 is in an intermediate part of said main duct associated with a main plug (17) controlled by a knob (18), and the secondary stopper (21) is positioned in a housing (19) provided on one side of said main duct, **characterised by** a guide sleeve (20) having a head (23) screwed into said housing (19) and a tubular section (25) facing towards the main duct (12), by the fact that the head of said sleeve has an axial bore (26) and the tubular section forms an internal chamber (27) in communication with said main duct in a part of the latter downstream of the first valve seat (16), and externally an annular channel (28) that is in fluid communication on one side, with said chamber by means of the radial bores (29) and, on the other side, with the secondary duct (31) exiting adjacent to the delivery nozzle (14), and by the fact that the second valve seat (32) is envisaged in said chamber (27) and the secondary stopper (21) is positioned in said chamber in association with said second valve seat and has a stem (34) passing through the axial bore of the head of the sleeve and terminating adjacent to an intermediate part of the control lever (22).

3. A rapid opening unit according to claim 2, in which in said chamber (27) a spring (38) is located tending to maintain the secondary stopper (21) normally in a closed position on the second valve seat (32) and in which, between the head of the guide sleeve and the lever there is a spring (37) tending to maintain said lever in a rest position.

4. A rapid opening unit according to the previous claims, in which seals are positioned between the guide sleeve head and the housing which it is screwed into, and between the stem of the second restricting device and the through axial bore in the head of said sleeve.
